# FASCICULE DE BREVET EUROPEEN

(11) **EP 0 561 671 B1**
(45) Date de publication et mention de la délivrance du brevet: **12.08.1998**
(21) Numéro de dépôt: 93400614.9
(22) Date de dépôt: 10.03.1993
(51) Int. Cl.: C03B 23/023, C03B 23/03, C03B 27/044, C03B 35/20, C03B 40/02

(54) **Procédé et dispositif de bombage de feuilles de verre**
Verfahren und Vorrichtung zum Biegen von Glasscheiben
Method and apparatus for bending glass sheets

(30) Priorité: 14.03.1992 DE 4208219
(43) Date de publication de la demande: 22.09.1993
(73) Titulaire: SAINT-GOBAIN VITRAGE, 92400 Courbevoie (FR); VEGLA Vereinigte Glaswerke GmbH, 52066 Aachen (DE)
(72) Inventeur: Ollfisch, Karl-Josef, W-5100 Aachen (DE); Kuster, Hans-Werner, W-5100 Aachen (DE); Nowoczyn, Hans-Werner, W-5100 Aachen (DE); Mucha, Horst, W-5100 Aachen (DE); Taubert, Eberhard, W-5120 Herzogenrath (DE)
(74) Mandataire: Menes, Catherine

(56) Documents cités:
- EP-A- 0 400 631
- EP-A- 0 404 676
- EP-A- 0 463 971
- EP-A- 0 502 756
- EP-A- 0 531 153
- DE-A- 1 596 494
- DE-C- 3 908 643
- FR-A- 2 323 650
- US-A- 4 539 031
- US-H- 480

## Description

La présente invention concerne un procédé et un dispositif pour fabriquer des vitrages bombés comprenant un ensemble de pressage constitué d'une presse de bombage équipée d'un moule de bombage supérieur à surface pleine et d'un moule annulaire inférieur déplacable horizontalement ainsi qu'un poste de refroidissement dans lequel les vitrages bombés posés sur le moule annulaire déplacable sont refroidis de manière accélérée.

Des appareils de ce type sont utilisés dans une large mesure pour fabriquer des vitrages de sécurité en verre trempé pour le secteur automobile. Dans ce cas, le poste de refroidissement contient des caissons de soufflage au moyen desquels les vitrages sont refroidis sur la totalité de leur surface par de l'air, à une vitesse de refroidissement élevée. Sauf pour les régions limitrophes des bords, ce refroidissement mené de façon uniforme sur les deux faces du vitrage, conduit à une distribution parabolique des contraintes, répartition isotrope caractérisée par une intégrale des contraintes suivant l'épaisseur nulle, une contrainte de compression en surface compensée donc par une contrainte de tension à coeur. Un dispositif de ce type est par exemple décrit dans le document EP-A-0 373 992.

Cependant, des appareils du type précité peuvent également être utilisés pour fabriquer des vitrages automobiles bombés en verre de sécurité feuilleté. Les vitrages de sécurité en verre feuilleté sont constitués de deux feuilles de verre individuelles relativement minces qui, après leur bombage sont unies l'une à l'autre par un film en matière thermoplastique. Les deux feuilles de verre individuelles peuvent être bombées individuellement ou sous la forme d'une paire de feuilles de verre appariées. Le refroidissement des vitrages après le bombage s'effectue assez lentement, car les vitrages doivent être essentiellement exempts de contraintes, un traitement spécifique de recuisson étant souvent opéré afin de favoriser le relâchement des contraintes induites pendant le bombage. Néanmoins dans la zone marginale des bords, il est souvent souhaité un renforcement obtenu par des contraintes dites de bords générées par un refroidissement plus rapide de cette zone et qui se retrouvent d'ailleurs pour les zones marginales d'un vitrage trempé. A noter par exemple que le document DE-A-26 40 206 propose de refroidir les vitrages, dans le cas d'une épaisseur de 1,5 à 2,5 mm, dans leur domaine marginal, à une vitesse de refroidissement de 85 à 150°C/min pour produire de la sorte des contraintes de compression uniaxiales de 1960 à 3430 N/cm² dans le domaine marginal.

Ces contraintes de bord sont anisotropes, c'est-à-dire que l'intégrale des contraintes selon l'épaisseur n'est pas nulle mais traduit une prépondérance des contraintes de compression. Dans ce cas, la compensation ne peut plus s effectuer totalement dans l'épaisseur du vitrage et a la limite de la zone des contraintes de bord, on trouve une zone intercalaire avec une prépondérance des contraintes en extension et de ce fait relativement fragilisée. Il est donc souvent souhaitable de imiter à un seuil donné le niveau des contraintes en extension dans cette zone intercalaire. Or, plus les contraintes de bords sont élevées, plus les contraintes compensatrices de traction sont grandes.

Dans les procédés traditionnels de bombage pour vitrages feuilletés, qui sont des procédés d'effondrement sous leur propre poids d'une paire de feuilles de verre posées sur un moule annulaire, les contraintes de bord générées sont relativement faibles, de sorte que la zone intercalaire pose assez peu de problèmes ou du moins, ceux-ci sont assez faciles à maîtriser. Par contre, cette maîtrise est beaucoup plus difficile avec les procédés dits feuille à feuille dans lesquels la feuille de verre est pressée au moyen d'une forme supérieure de bombage et d'une forme inférieure annulaire servant également de support lors du transfert vers le poste de refroidissement.

Il est par ailleurs connu du document DE-A-1 595 494, d'utiliser des cadres de bombage chauffants dans les procédés traditionnels de bombage pour vitrages feuilletés.

L'invention a pour but de développer un procédé et un dispositif de bombage pour des vitrages du type spécifié d'une manière telle que la fabrication de feuilles de verre bombées destinées à des vitrages en verre feuilleté soit possible avec des contraintes de bord relativement faibles et bien maîtrisables de manière voulue et reproductible.

Selon l'invention ce but est atteint par un procédé selon la revendication 1.

L'invention a également pour objet un dispositif selon la revendication 2.

L'invention part de la considération que les contraintes de bord sont déterminées par la vitesse de refroidissement du vitrage dans le domaine marginal et que cette vitesse de refroidissement est influencée, lors du bombage et lors du refroidissement ultérieur du vitrage, par la masse et la température du morne annulaire. Or, dans les procédés de bombage par pressage mettant en oeuvre un même cadre annulaire servant à la fois de contreforme de pressage et de cadre de transfert vers le poste de refroidissement, « l'histoire » du verre et celle du cadre sont différentes, le cadre annulaire subissant un certain refroidissement à chaque cycle alors que le verre provient directement du four de réchauffage. Tel n'est évidemment pas le cas pour les procédés traditionnels de bombage pour feuilletés où le verre repose sur le cadre annulaire dès son entrée dans le four de réchauffage. Grâce au chauffage conforme à l'invention du moule annulaire jusqu'à une température prédéfinie, il est cependant possible de procurer, dans le domaine marginal des vitrages, des conditions de refroidissement fondamentalement similaires à celles rencontrées avec des procédés de bombage par effondrement.

Il s'est avéré que l'on peut obtenir de bons résultats en ce qui concerne l'état des contraintes dans le domaine marginal dans le cas de vitrages en verre feuilleté, lorsque la température de l'anneau de bombage qui, selon la réalisation de l'appareil et du procédé correspondant, sans le chauffage conforme à l'invention, s'élève à une valeur d'environ 100 à 200°C, est accrue par le chauffage électrique d'une manière telle que, pendant l'opération de pressage et pendant le transfert du vitrage bombé dans le poste de refroidissement, elle atteigne une valeur comprise entre 250 et 400°C. La température souhaitée dans ce cas particulier à l'intérieur de ce domaine de températures peut être déterminée au moyen de quelques essais.

L'appareil conforme à l'invention n'est cependant pas uniquement avantageux pour la production de contraintes de bord de vitrages feuilletés, mais permet en outre d'améliorer la rigidité des vitrages, avantage qui a également son importance lors de la fabrication de verre de sécurité trempé. Il est connu que la précision de la forme des moules de bombage est influencée par la dilatation thermique. Cette variation de forme imposée par la température de travail doit être compensée lors de la fabrication des outils de bombage. Cependant, lorsque, comme c'est le cas pour un appareil conforme à l'invention, la température de fonctionnement du moule annulaire n'est pas connue ou est exposée à des fluctuations importantes, une compensation précise de la variation de forme imposée par la température est pratiquement impossible. Suivant l'invention, le moule annulaire peut cependant présenter une température de fonctionnement constante présélectionnée de sorte que, dans ce cas, une compensation exacte de la variation de forme imposée par la température est possible.

Le moule annulaire est équipé du capteur de température qui commande le régulateur de puissance réglant le courant de chauffage pour le chauffage par résistance. De cette façon, la température du morne annulaire peut être réglée à la valeur souhaitée dans le domaine de températures relativement étroit, de sorte qu'une constance particulièrement élevée des valeurs de contraintes souhaitées et une précision de forme particulièrement élevée du moule annulaire sont atteintes.

D'autres particularités et avantages de l'invention ressortiront des revendications dépendantes et de la description suivante d'un exemple de réalisation de l'invention donné avec référence aux dessins annexés, dans lesquels :

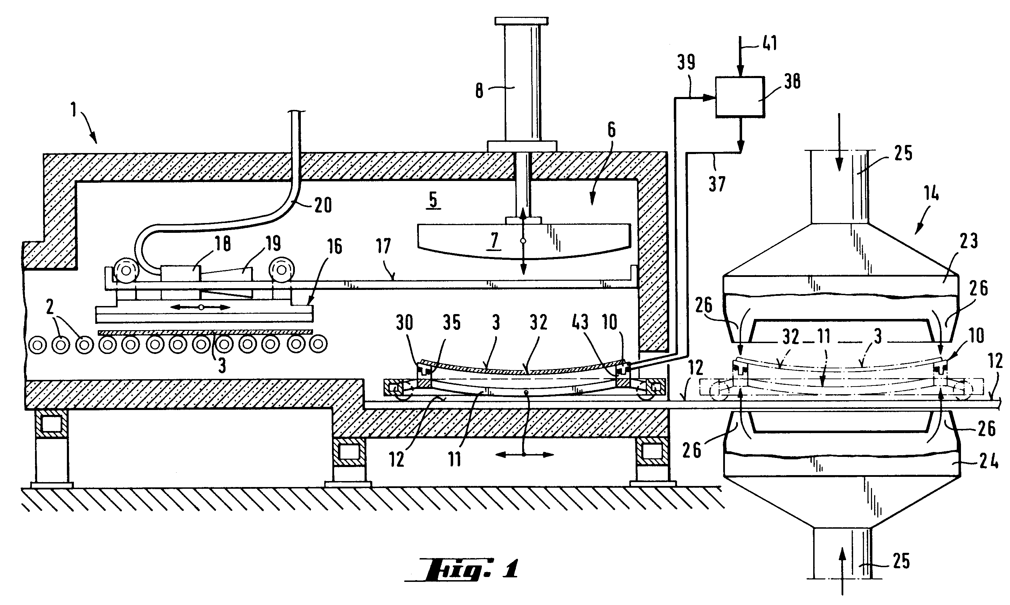

* **la figure 1** illustre, dans sa totalité, une installation pour la fabrication de vitrages bombés, et
* **la figure 2** illustre la structure du moule annulaire inférieur dans une vue en coupe fragmentaire.

Une installation pour le bombage de vitrages suivi de leur refroidissement contrôlé comprend un four continu 1 équipé d'un convoyeur formé par des rouleaux entraînés 2. Dans ce four continu 1 les vitrages plans 3 sont chauffés à leur température de bombage. Dans une chambre de transfert et de bombage 5, attenante au four 1 se trouve une presse de bombage 6 qui comprend un moule de bombage supérieur à surface pleine 7, déplacé vers le haut et vers le bas à l'aide d'un dispositif d'actionnement adéquat, dans le cas représenté à l'aide du vérin 8. La presse de bombage 6 comprend, en outre, un moule annulaire inférieur 10, monté sur un chariot 11 qui peut se déplacer sur des rails 12 et conduire ainsi le vitrage bombé dans un poste de refroidissement 14 installé à côté de la chambre de bombage.

Pour transférer les vitrages 3, chauffés à la température de bombage, du convoyeur à rouleaux 2 à la presse de bombage 6, 11 est prévu un plateau-ventouse 16 qui peut se déplacer des rails 17. A l'aide d'un ventilateur 18 et d'une tromp venturi 19, le plateau-ventouse 16 est mis sous dépression pour aspirer les vitrages 3. Dans le poste de bombage 6, les vitrages 3 sont libérés du plateau-ventouse 16 et sont déposés sur le moule annulaire 10 par le fait que le plateau-ventouse 16 est brièvement mis en surpression à l'aide de la conduite d'air comprimé 20.

Lorsque les vitrages 3 sont bombés suite à l'action de la presse de bombage 6, ils sont transférés dans le poste de refroidissement 14, posés sur le moule annulaire 10. Dans le poste de refroidissement 14 sont installés deux caissons de soufflage 23, 24 alimentés en air par des conduites 25. Les caissons de soufflage présentent des ajutages à fente annulaire 26 dont la forme correspond en substance à celle des vitrages et à l'aide desquels les vitrages bombés sont refroidis dans leur domaine marginal à une vitesse de refroidissement plus élevée que dans la zone centrale.

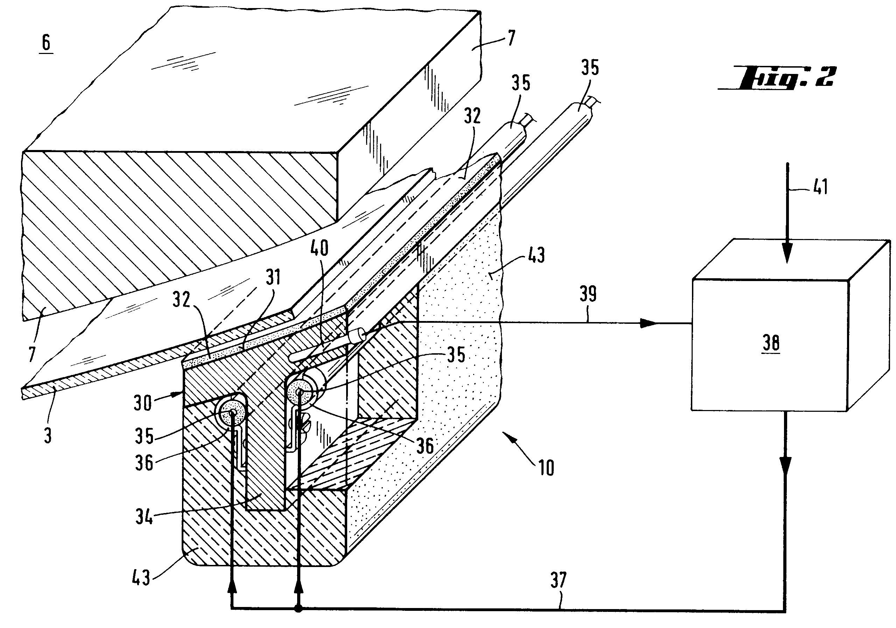

La structure du moule annulaire 10 est illustrée en détail sur la figure 2. Le moule annulaire 10 comporte un noyau métallique 30 d'une section transversale en substance en forme de T avec une branche transversale légèrement inclinée pour tenir compte du bombage du vitrage. La paroi supérieure 31 de cette branche transversale définit la piste du moule et correspond, à la température de fonctionnement de la presse de bombage, avec une précision élevée, à la forme souhaitée du vitrage bombé, bien entendu compte tenu de la déformation en retour du vitrage après l'opération de pressage suite à la déformation élastique. Le noyau métallique 30 est de préférence fait d'un alliage d'acier ou de fonte réfractaire. De préférence, le verre n'entre pas directement en contact avec le noyau métallique, mais la piste 31 est recouverte d'un intercalaire 32 par exemple en un feutre de fibres métalliques.

Sur l'un ou sur les deux côtés du montant vertical 34 du noyau métallique 30 sont disposées, tout autour de l'ensemble du moule annulaire, des résistances électrique chauffantes, par exemple sous la forme de conducteurs chauffants sous gaine 35 fixés à l'aide de colliers 36. Des conducteurs chauffants appropriés 35 sont constitués par exemple d'une âme formée d'un fil de résistance et entourée par une couche isolante, par exemple en perles de céramique, elle-même revêtue d'une gaine extérieure en un métal adéquat. Les conducteurs chauffants 35 sont connectés à un câble résistant à la chaleur 37 qui a la forme d'un câble souple et aboutit à un régulateur de puissance 38 installé à l'extérieur de la zone de chauffage. Une ligne de signalisation 39 aboutit également au régulateur de puissance. Cette ligne de signalisation 39 est connectée à un thermocouple 40 installé dans une forure prévue dans le noyau métallique 30 du moule annulaire 10. Alors que par l'intermédiaire de la ligne de signalisation 39, la valeur effective de la température commande le régulateur de puissance 38, la ligne 41 prédéfinit la valeur de consigne souhaitée de la température, de sorte que de cette façon la température du moule annulaire 10 est réglée sur la valeur souhaitée.

Le montant médian 34 du noyau métallique 30 du moule annulaire est entouré de tout côté par une enveloppe isolante thermique 43 en un matériau isolant adéquat. Cette enveloppe isolante 43 empêche un refroidissement excessif du moule annulaire dans le poste de refroidissement et contribue ainsi à la constance de la température du moule annulaire dans un domaine de températures étroit.

Dans une autre variante de l'invention, la piste du moule est avantageusement équipée d'un revêtement comportant une couche céramique chauffante. Ce revêtement est de préférence un empilement qui comprend successivement (à commencer par la couche en contact avec la paroi 31), une couche dite d'ancrage qui permet de compenser les différences de dilatation entre le noyau métallique et la couche chauffage, une couche d'un isolant électrique, la couche chauffante, une couche d'isolant électrique pour partie en contact avec le verre et une couche surfacique de contact.

De bons résultats sont par exemple obtenus avec l'empilement suivant : Ni-Al (130 microns) - Al₂O₃ (330 microns) - MoSi₂ (90 microns avec des surépaisseurs localisées de sorte que la couche peut atteindre jusqu'à 130 microns) - ZrO₂-Y₂O₃ (70 microns) et enfin une couche surfacique en aluminium de 40 microns.

Les couches sont déposées par torche à flamme ou à plasma.

Un tel empilement permet d'obtenir une température allant jusqu'à 650°C tout en imposant une tension inférieure à 42 volts.

A noter que pour éviter une déformation du moule, ce système ne se substitue pas au chauffage du noyau métallique mais vient le compléter en permettant surtout de différencier le chauffage de la piste intérieure et de la piste extérieure du moule ce qui permet un contrôle plus fin des contraintes de bords.

Le verre peut être placé directement en contact avec ce revêtement composite ou comme dans le cas précédent avec un intercalaire de préférence en fibres métalliques.

## Revendications

1. Procédé d'obtention de vitrages bombés selon lequel le vitrage est réchauffé dans un four (1), pressé entre une forme supérieure pleine (7) et un morne annulaire inférieur (10) puis conduit, à l'aide dudit morne annulaire inférieur (10), jusqu'à un poste de refroidissement contrôlé (14), ***caractérisé en ce que*** le moule annulaire (10) est maintenu à une température choisie dans un domaine compris entre 250 et 400°C pendant l'opération de pressage et le transfert au poste de refroidissement (14).

2. Dispositif pour la fabrication de vitrages bombés comprenant un four (1) de réchauffage, une presse de bombage équipée d'un morne de bombage supérieur (7) à surface pleine et un moule annulaire inférieur (10) déplacable horizontalement ainsi qu'un poste de refroidissement (14) dans lequel les vitrages bombés, disposés sur le moule annulaire déplacable (10), sont refroidis de manière accélérée, ***caractérisé en ce que*** le morne annulaire (10) est pourvu d'une résistance chauffante électrique (35) au moyen de laquelle il peut être chauffé à une température choisie dans un domaine compris entre 250 et 400°C, d'un capteur de température (40) et d'un régulateur (38).

3. Dispositif suivant la revendication 2, ***caractérisé en ce que*** le moule annulaire (10) comporte un noyau métallique (30) de section transversale en forme de T et que des deux côtés du montant médian (34) du moule annulaire (10) est chaque fois disposée une résistance chauffante électrique.

4. Dispositif suivant les revendications 2 et 3, ***caractérisé en ce que*** le montant médian (34) du morne annulaire (10) est entouré par une enveloppe isolante thermique (43).

5. Dispositif suivant l'une quelconque des revendications 3 à 5, ***caractérisé en ce que*** dans le noyau métallique (30) du moule annulaire (10) est installé le capteur de température (40).

6. Dispositif suivant la revendication 5, ***caractérisé en ce que*** la température du moule annulaire (10) peut être réglée à une valeur prédéfinie au moyen du régulateur (38) commandé par le capteur de température (40).

7. Dispositif suivant l'une des revendications précédentes, ***caractérisé en ce que*** la piste du moule est équipée d'un revêtement comportant une couche céramique chauffante.

8. Dispositif suivant la revendication 7, ***caractérisé en ce que*** ladite couche céramique est une couche du type MoSiO₂ d'une épaisseur comprise entre 90 et 130 microns.

9. Dispositif suivant la revendication 8, ***caractérisé en ce que*** l'épaisseur de ladite couche MoSiO₂ est modulée de façon à différencier localement le chauffage.

## Claims

1. Process for obtaining bent glazings, according to which the glazing is heated in a furnace (1), pressed between a solid, upper mould (7) and an annular, lower mould (10) and is then passed, with the aid of said annular, lower mould (10), to a controlled cooling station (14), characterized in that the annular mould (10) is maintained at a temperature selected within a range between 250 and 400°C during the operation of pressing and transfer to the cooling station (14).

2. Apparatus for the manufacture of bent glazings incorporating a heating furnace (1), a bending press equipped with an upper, bending mould (7) having a solid surface and a horizontally displaceable, lower, annular mould (10), as well as a cooling station (14), in which the bent glazings, located on the displaceable, annular mould (10), are cooled in an accelerated manner, characterized in that the annular mould (10) is provided with an electric heating resistor (35) by means of which it can be heated to a temperature chosen within the range 240 to 400°C, a temperature sensor (40) and a regulator (38).

3. Apparatus according to claim 2, characterized in that the annular mould (10) has a metal core (30) with a T-shaped cross-section and that an electric heating resistor is placed on each of the two sides of the median upright (34) of the annular mould (10).

4. Apparatus according to claims 2 and 3, characterized in that the median upright (34) of the annular mould (10) is surrounded by a thermally insulating envelope (43).

5. Apparatus according to any one of the claims 3 to 5, characterized in that the temperature sensor (40) is installed in the metal core (30) of the annular mould (10).

6. Apparatus according to claim 5, characterized in that the temperature of the annular mould (10) can be regulated to a predefined value by means of the regulator (38) controlled by the temperature sensor (40).

7. Apparatus according to one of the preceding claims, characterized in that the track of the mould is equipped with a covering incorporating a ceramic heating layer.

8. Apparatus according to claim 7, characterized in that said ceramic layer is of the MoSiO₂ type and has a thickness between 90 and 130 microns.

9. Apparatus according to claim 8, characterized in that the thickness of said MoSiO₂ layer is modulated so as to bring about a local heating differentiation.

## Patentansprüche

1. Verfahren zum Herstellen gebogener Glasscheiben, bei dem die Glasscheibe in einem Ofen (1) aufgeheizt, zwischen einer oberen vollflächigen Form (7) und einer unteren Ringform (10) gepreßt und dann mittels der unteren Ringform (10) zu einer Kühlstation (14) zum gesteuerten Abkühlen überführt wird,
**dadurch gekennzeichnet,** daß die Ringform (10) während des Biegevorgangs und der Überführung zur Kühlstation (14) auf einer vorgegebenen Temperatur im Bereich zwischen 250 und 400 °C gehalten wird.

2. Vorrichtung zum Herstellen gebogener Glasscheiben, mit einem Aufheizofen (1), einer eine obere vollflächige Biegeform und eine untere horizontal verfahrbare Ringform umfassenden Biegepresse und einer Kühlstation, in der die gebogenen Glasscheiben auf der verfahrbaren Ringform liegend beschleunigt abgekühlt werden,
**dadurch gekennzeichnet**, daß die Ringform (10) mit einem elektrischen Heizwiderstand (35), mit dem sie auf eine vorgegebene Temperatur im Bereich zwischen 250 und 400 °C aufheizbar ist, mit einem Temperaturfühler (40) und einem Regler (38) versehen ist.

3. Vorrichtung nach Anspruch 2, **dadurch gekennzeichnet**, daß die Ringform (10) einen Metallkern (30) mit T-förmigem Querschnitt aufweist, und daß auf beiden Seiten des Mittelsteges (34) der Ringform (10) jeweils ein elektrischer Heizwiderstand (35) angeordnet ist.

4. Vorrichtung nach Anspruch 2 und 3, **dadurch gekennzeichnet**, daß der Mittelsteg (34) der Ringform (10) von einem Wärmeisolationsmantel (43) umgeben ist.

5. Vorrichtung nach Anspruche 3 oder 4, **dadurch gekennzeichnet**, daß der Temperaturfühler (40) in dem Metallkern (30) der Ringform (10) angeordnet ist.

6. Vorrichtung nach Anspruch 5, **dadurch gekennzeichnet**, daß die Temperatur der Ringform (10) mittels des vom Temperaturfühler (40) gesteuerten Reglers (38) auf eine vorgegebene Temperatur regelbar ist.

7. Vorrichtung nach einem der vorstehenden Vorrichtungsansprüche, **dadurch gekennzeichnet**, daß die Auflagefläche der Ringform mit einer eine heizbare Keramikschicht umfassenden Verkleidung ausgestattet ist.

8. Vorrichtung nach Anspruch 7, **dadurch gekennzeichnet,** daß die besagte Keramikschicht eine Schicht des MoSiO₂-Typs mit einer zwischen 90 und 130 µm liegenden Dicke ist.

9. Vorrichtung nach Anspruch 8, **dadurch gekennzeichnet,** daß die Dicke der MoSiO₂-Schicht zum örtlichen Differenzieren der Aufheizung unterschiedlich gestaltet ist.
